# EUROPEAN PATENT APPLICATION

(11) **EP 1 238 955 A2**
(43) Date of publication of application: **11.09.2002**
(21) Application number: 02004780.9
(22) Date of filing: 01.03.2002
(51) Int. Cl.: C04B 35/634

(54) **Baking sheet, baking printed sheet and burned sheet thereof**

(30) Priority: 08.03.2001 JP 2001064381; 08.03.2001 JP 2001064382
(71) Applicant: NITTO DENKO CORPORATION, Osaka (JP)
(72) Inventor: Kume, Katsuya, Ibaraki-shi, Osaka (JP); Okazaki, Katsuyuki, Ibaraki-shi, Osaka (JP); Kai, Makoto, Ibaraki-shi, Osaka (JP)
(74) Representative: Grünecker, Kinkeldey, Stockmair & Schwanhäusser Anwaltssozietät

(57) **Abstract**

A baking sheet, a baking printed sheet and a burned sheet obtained by the baking printed sheet are disclosed. The baking sheet comprises a printing sheet comprising an ink receiving layer in a sheet form, said ink receiving layer comprising a mixture of an inorganic powder and a silicon-containing binder and being located on a surface of the printing sheet, wherein said silicon-containing binder comprises trimethylsiloxysilicic acid or a polymer comprising monofunctional M units represented by the formula R₃SiO- wherein R represents a compound group, and quadrifunctional Q units represented by the formula Si(O-)₄.

## Description

### FIELD OF THE INVENTION

The present invention relates to a baking sheet and a baking printed sheet, which can form a burned sheet having excellent reflectance and is suitable for the formation of management labels or the like of aluminum products . The present invention also relates to a burned sheet obtained from the baking printed sheet.

### BACKGROUND OF THE INVENTION

Conventional management labels in production steps of heat-resistant products (for example, products comprising metals such as stainless steel or aluminum, or inorganic materials), particularly aluminum products, include labels obtained by applying a heat-resistant paint to a metal plate or by subjecting a metal plate to laser etching. However, labels mainly comprising metal plates require means such as riveting in fixing the labels to products such as a slab of aluminum. Thus, there has been the problem in which its fixing workability is poor or the problem in which it is difficult to apply the labels to flexible products such as rolled foils.

### SUMMARY OF THE INVENTION

Accordingly, one object of the present invention is to provide a baking sheet which can easily be fixed to adherends (heat-resistant products: flexible products such as rolled foils, or aluminum products) after imparting an information to the sheet according to circumstances in situ, and also withstands annealing step conditions of the heat-resistant products of, for example, 530°C for ten and several hours.

Another object of the present invention is to provide a baking printed sheet comprising the baking sheet and a thermal transfer ink information imparted to an ink receiving layer of the baking sheet.

Still another object of the present invention is to provide a burned sheet obtained from the baking printed sheet.

The baking sheet according to the present invention comprises a printing sheet which comprises an ink receiving layer in a sheet form, the ink receiving layer comprising a mixture of an inorganic powder and a silicon-containing binder and being located on a surface of the ink receiving layer of the printing sheet, wherein said silicon-containing binder comprises trimethylsiloxysilicic acid or a polymer comprising monofunctional M units represented by the formula R₃SiO- wherein R represents a compound group, and quadrifunctional Q units represented by the formula Si(O-)₄.

The baking printed sheet according to the present invention comprises:
a printing sheet comprising an ink receiving layer in a sheet form, the ink receiving layer comprising a mixture of an inorganic powder and a silicon-containing binder and being located on a surface of the ink receiving layer of the printing sheet, and
a thermal transfer ink information imparted to the ink receiving layer of the printing sheet,
wherein said silicon-containing binder comprises trimethylsiloxysilicic acid or a polymer comprising monofunctional M units represented by the formula R₃SiO- wherein R represents a compound group, and quadrifunctional Q units represented by the formula Si(O-)₄, and said thermal transfer ink information comprises an ink comprising a metal oxide coloring material and an organic binder.

The burned sheet according to the present invention is obtained by adhering the baking printed sheet to heat-resistant products and burning the sheet at a temperature of 200°C or higher, thereby baking the sheet to the aluminum products.

According to the present invention, a variety of flexible printed sheets can be formed according to circumstances in situ by imparting ink information thereto by a thermal transfer printing. Those printed sheets can satisfactorily adhered to, for example, adherends (heat-resistant products) having curved surfaces, and baked through a heat treatment to thereby form burned sheets satisfactorily retaining the imparted information. The burned sheets thus formed have excellent fixing workability. Further, the burned sheets strongly bind and retain an inorganic powder by that silica formed by changing a silicon-containing binder by burning is sintered, and have excellent chemical resistance, heat resistance, weather resistance, reflectance and the like, and can be utilized as, for example, management labels withstanding various annealing conditions in production steps of heat-resistant products (products made of metals or inorganic materials; particularly aluminum products).

### BRIEF DESCRIPTION OF THE DRAWINGS

Fig. 1 is a sectional view of one embodiment of the baking printed sheet of the present invention; and
Fig. 2 is a sectional view of one embodiment of the printing sheet of the present invention.

In the drawings, the symbols are as follows.
1: printing sheet
   11: ink receiving layer
   12: reinforcing substrate
2: pressure-sensitive layer
3: thermal transfer ink information
4: adherend

### DETAILED DESCRIPTION OF THE INVENTION

The baking sheet of the present invention is a sheet to be baked to heat-resistant product to which heat treatment is applied, and comprises a printing sheet which comprises an ink receiving layer comprising a mixture of an inorganic powder and silicon-containing binder in a sheet form. The silicon-containing binder comprises trimethylsiloxysilicic acid or a polymer comprising monofunctional M units represented by the formula R₃SiO- wherein R represents a compound group, and quadrifunctional Q units represented by the formula Si(O-)₄. The ink receiving layer can receive an ink information by a thermal transfer method.

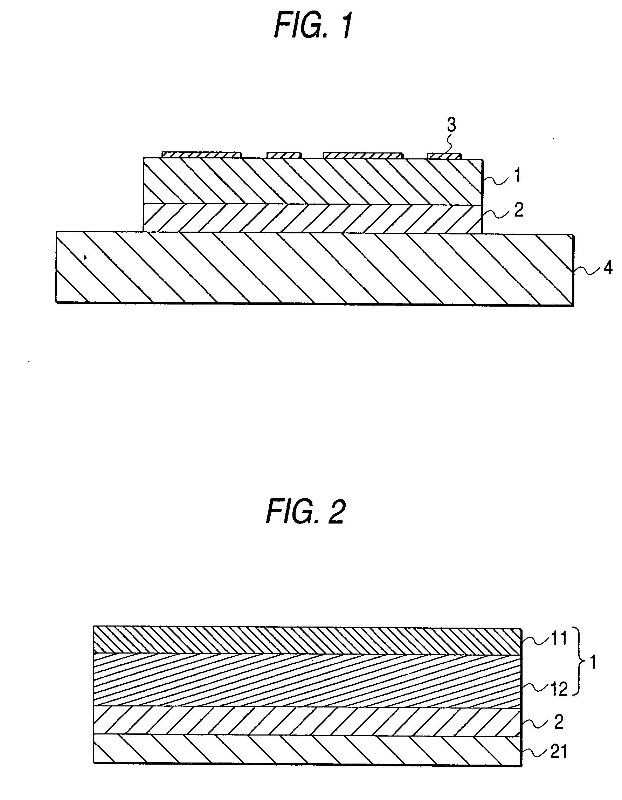

The printing sheet is not particularly limited so long as the ink receiving layer is present in the form of a sheet and is located on at least one side of the printing sheet. Therefore, the printing sheet can have any appropriate embodiment. Examples of the embodiment of the printing sheet include an embodiment as shown in Fig. 1, wherein the printing sheet consists of the ink receiving layer, an embodiment shown as in Fig. 2, wherein an ink receiving layer 11 is reinforced with a reinforcing substrate 12, and an embodiment using a pressure-sensitive adhesive layer.

The reinforced embodiment may be achieved by any appropriate method, such as a method in which a ink receiving layer is provided on a reinforcing substrate as shown in Fig. 2, a method in which a reinforcing substrate is impregnated with an ink receiving layer-forming material, or a method in which a reinforcing substrate is disposed in an ink receiving layer. The reinforcing substrate used may be an appropriate substrate, and examples thereof include coating layers of resins, resin films, and porous substrates such as fabrics or non-woven fabrics.

The reinforcing substrate may be made of a material which disappears upon heating, for example, a polymer such as polyesters, polyimides, fluororesins or polyamides, or may be made of a material which does not disappear upon heating, for example, glasses, ceramics or metals. The reinforcing substrate preferably used comprises a coating layer or film of a polymer which decomposes at low temperature and has excellent tensile strength, such as ethyl cellulose. Thickness of the reinforcing substrate can appropriately be determined, but is generally 1 to 100 µm, preferably 3 to 50 µm, more preferably 5 to 25 µm, from the standpoints of a reinforcing effect, disappearing property by burning and baking property of a sintered body.

The inorganic powder used to form the ink receiving layer serves to improve heat resistance (generally about 600°C or lower, preferably about 800°C or lower) and to form a background color of the burned sheet obtained from the baking printed sheet. Therefore, metal powder, ceramic powder or the like can appropriately be used as the inorganic powder. The inorganic powder has a particle size of generally 50 µm or smaller, preferably 0.05 to 20 µm, but the particle size is not particularly limited thereto. Use of a flaky powder prepared by adhering the inorganic powder to thin platy bases such as mica is effective to improve reflectance and hiding power (hiding a background color of heat-resistant products that are adherends).

Examples of the inorganic powder generally used include white powder such as silica, titania, alumina, zinc white, zirconia, calcium oxide, mica, potassium titanate or aluminum borate powder. Examples of the inorganic powder further include metal compounds, such as carbonates, nitrates or sulfates, which are oxidized at a temperature lower than the burning temperature to convert the same into such oxide type white ceramics. Of those, acicular crystals such as potassium titanate or aluminum borate are preferably used from the standpoints of whiteness, sinter strength and the like.

Further examples of the inorganic powder include red powder such as manganese oxide-alumina, chromium oxide-tin oxide, iron oxide or cadmium sulfide-selenium sulfide powder; blue powder such as cobalt oxide, zirconia-vanadium oxide or chromium oxide-divanadium pentoxide powder; black powder such as chromium oxide-cobalt oxide-iron oxide-manganese oxide, chromate or permanganate powder; yellow powder such as zirconium-silicon-praseodymium, vanadium-tin or chromium-titanium-antimony powder; green powder such as chromium oxide, cobalt-chromium or alumina-chromium powder; and pink powder such as aluminum-manganese or iron-silicon-zirconium powder.

The silicon-containing binder for the formation of the ink receiving layer, which can appropriately be used comprises trimethylsiloxysilicic acid or a polymer (MQ resin) comprising monofunctional M units represented by the formula R₃SiO- and quadrifunctional Q units represented by the formula Si(O-)₄, which is known as a tackifier for silicone-based pressure-sensitive adhesives. In the above formula, each R may be a compound group having appropriate structural units, for example, organic groups such as aliphatic hydrocarbon groups (e.g., methyl, ethyl or propyl), aromatic hydrocarbon groups (e.g., phenyl) or olefin groups (e.g., vinyl) , or hydrolysable groups such as hydroxyl. The silicon-containing binder having excellent shape retention is preferably used.

The ink receiving layer or printing sheet can be formed by, for example, the following method. At least one kind of the inorganic powder and at least one kind of the silicon-containing binder are mixed with a ball mill or the like using an organic solvent if required and necessary. The resulting liquid mixture is spread by an appropriate method, if required and necessary, on a support such as a reinforcing substrate or a separator, and the resulting coating is dried to form the sheet. In this formation method, the proportion of the inorganic powder to the silicon-containing binder can appropriately be determined according to the handleability or strength of the printing sheet, the strength or hiding power of the burned sheet, and the like. From the standpoints of degree of coloration, such as whiteness, and strength after burning in combination, the inorganic powder is used in an amount of 1 to 1,000 parts by weight, preferably 20 to 200 parts by weight, more preferably 40 to 120 parts by weight, per 100 parts by weight of the silicon-containing binder.

An appropriate organic solvent can be used as the organic solvent used if required and necessary. Examples of the organic solvent generally used include toluene, xylene, butyl carbitol, ethyl acetate, butyl cellosolve acetate, methyl ethyl ketone and methyl isobutyl ketone. Although the liquid mixture is not particularly limited, it is preferably prepared so as to have a solid concentration of 5 to 85% by weight from the standpoints of spreadability and the like. In preparing the liquid mixture, appropriate additives such as dispersants, plasticizers or combustion aids can be compounded with the liquid mixture.

A method of spreading the liquid mixture is not particularly limited, but a method having excellent ability to regulate a coating film thickness, such as a doctor blade method or a gravure roll coater method, is preferably used. It is preferable to sufficiently defoam the liquid mixture by, for example, adding a defoamer so as to form a bubble-free spread layer. The thickness of the printing sheet or shape retention layer formed can appropriately be determined, but is generally 5 µm to 5 mm, preferably 10 µm to 1 mm, more preferably 20 to 200 µm.

In forming the ink receiving layer, organic compounds or the like can be compounded, if desired and necessary, for the purpose of improving flexibility, shape retention force, chemical resistance, ink fixability or the like. Examples of the organic compound include silicone rubbers, cellulosic polymers, hydrocarbon polymers, vinyl polymers, styrenic polymer, acetal polymers, butyral polymers, acrylic polymers, polyester polymers, urethane polymers, cellulosic polymers and various waxes. Those compounding agents can be used alone or as mixtures of two kinds or more thereof.

Use of the silicone rubbers is particularly preferable. The silicone rubbers used are not particularly limited, and appropriate silicone rubbers can be used. Various modified silicone rubbers such as phenol modified products, melamine modified products, epoxy modified products, polyester modified products, acryl modified products or urethane modified products can also be used. The silicone rubbers having excellent shape retention force and flexibility are preferably used.

The silicone rubber is used in an amount of 1 to 1,000 parts by weight, preferably 5 to 500 parts by weight, more preferably 10 to 200 parts by weight, per 100 parts by weight of the silicon-containing binder from the standpoints of improvement in chemical resistance or the like. Where the silicone rubber is used, the amount of the inorganic powder used is preferably based on the total amount of silicon-containing binder and silicon rubber from the standpoints of handleability and strength of the printing sheet, strength and hiding power of the burned sheet, and the like.

On the other hand, it is particularly preferable to use cellulosic polymers such as ethyl cellulose from the standpoints of fixability of ink by thermal transfer method, improvement in strength of the printing sheet, baking property by burning, and the like. The amount of the organic compound such as cellulosic polymer, other than the silicone rubbers is 1 to 1,000 parts by weight, preferably 20 to 200 parts by weight, more preferably 40 to 150 parts by weight, per 100 parts by weight of the silicon-containing binder or, when the silicone rubber is used, per 100 parts by weight of the sum of the silicon-containing binder and the silicone rubber. However, the amount of the organic compound used is not limited to the above amounts .

The printing sheet can be made porous for the purpose of, for example, smooth volatilization of a decomposition gas by heating. For example, where a pressure-sensitive adhesive layer for provisional adhering is provided, there is the case where the printed sheet for baking swells due to a decomposition gas resulting from heating. This swelling can be prevented by forming a porous printing sheet. The porous printing sheet can be formed by appropriate methods, for example, a method in which many fine holes are formed in a printing sheet by punching or the like, or a method in which a perforated substrate such as a woven fabric or a non-woven fabric is used as a reinforcing substrate.

The baking printed sheet according to the present invention comprises the above-described printing sheet having an ink receiving layer present on the surface thereof, and a thermal transfer ink information imparted to the ink receiving layer of the printing sheet. An example of the baking printed sheet is shown in Fig. 1. Fig. 1 shows an embodiment wherein the baking printed sheet is provisionally adhered to an adherend 4 through a pressure-sensitive adhesive layer 2. When a burned sheet is formed from such a baking printed sheet by burning, organic components of the pressure-sensitive adhesive or the like disappear by burning to form a product in which a burned product of the printed sheet for baking is baked to an adherend. In this embodiment, where the printing sheet is previously formed, it is preferable to form the pressure-sensitive adhesive layer 2 to secure the fixability to the adherend 4. On the other hand, where the printing sheet is directly formed on the surface of the adherend, formation of the pressure-sensitive adhesive layer 2 is not necessary.

The baking printed sheet can be formed by imparting a thermal transfer ink information 3 to a printing sheet 1 as in the embodiment shown in Fig. 1. In such a formation, an appropriate information element such as an engraved information comprising holes or projections and recesses, or a form information obtained by punching a sheet into an appropriate form can be combined in addition to the thermal transfer ink information. The thermal transfer ink information can be imparted using a thermal transfer printer and an ink sheet, whereby optional ink information can efficiently be imparted with good precision according to circumstances.

An ink used to form a thermal transfer ink information comprises a metal oxide coloring material comprising oxides of appropriate metals such as iron, nickel, chromium, cobalt or copper, and an organic binder, from the standpoint of heat resistance or the like. The organic binder functions to hold such a coloring material, and appropriate organic binders such as waxes or resins known in a thermal transfer printing method can be used. Resin binders are preferably used from the standpoint of roller adhesive properties of the printed sheet to high temperature adherends. An ink may also be used which contains glass frit or the like for the purpose of improving fixing power by heat treatment. An ink sheet can be obtained by, for example, holding an ink on a supporting substrate comprising a film, cloth or the like.

The thermal ink information which is imparted to the printing sheet is optional, and an appropriate ink information such as characters, design pattern or bar code pattern may be imparted. In the case of forming an identification label such as a management label, it is preferable to impart an ink information so that a satisfactory contract or a satisfactory difference in color tone is formed between the printing sheet and the ink information after heat treatment. The step of imparting an ink information to the printing sheet may be either before or after the printing sheet is provisionally adhered to and adherend. However, a method is generally employed which prepares beforehand a printed sheet for baking having an ink information imparted thereto and provisionally adheres the same to an adherend.

The baking printed sheet is preferably used in the following application. The baking printed sheet is provisionally adhered to an adherend, and then heated to thereby bake and fix a heat-treated product (burned body) of the printed sheet to the adherend. In some cases, the baking printed sheet can be provisionally adhered to an adherend with its own pressure-sensitive adhesive force. On the other hand, if desired and necessary, a pressure-sensitive adhesive layer may be provided on the printed sheet for the purpose of, for example, improvement of the provisional adhering force. In such a case, the pressure-sensitive adhesive layer can be provided at an appropriate stage before the printed sheet is provisionally adhered to an adherend and is subjected to heat treatment. Therefore, the pressure-sensitive adhesive layer can previously be formed before an information is imparted to the printing sheet to obtain a baking printed sheet, and can also be provided after a baking printed sheet has been obtained.

Appropriate pressure-sensitive materials such as rubber, acrylic, silicone or vinyl alkyl ether adhesives can be used to form the pressure-sensitive adhesive layer to be provided if required and necessary. The pressure-sensitive adhesive layer can be formed by an appropriate method. Examples of the method include a method in which a pressure-sensitive adhesive material is applied to the printing sheet or the baking printed sheet by an appropriate coating method using a doctor blade, a gravure roll coater or the like, and a method in which a pressure-sensitive adhesive layer formed on a separator by the above-described coating method is transferred to the printing sheet or the baking printed sheet.

The pressure-sensitive adhesive layer can also be provided in the form of dots by an appropriate coating method such as a rotary screen method for the purpose of smooth volatilization of a decomposition gas at heat treatment. Thickness of the pressure-sensitive adhesive can be determined according to the purpose of use of adherends, and the like. The thickness is generally 1 to 500 µm, preferably 3 to 100 µm, more preferably 5 to 50 µm. The pressure-sensitive adhesive layer thus provided is preferably covered with a separator 2 as in the embodiment shown in Fig. 2 to prevent contamination or the like until provisionally adhering the pressure-sensitive adhesive layer to an adherend. The baking printed sheet can be provisionally adhered to an adherend by, for example, a method in which the baking printed sheet is manually, or a method in which the baking printed sheet is automatically applied by a robot or the like.

The baking printed sheet provisionally adhered to an adherend can be heat treated under appropriate heating conditions according to heat resistance of an adherend. Heating temperature is generally 200°C or higher, preferably 200 to 1,200°C, more preferably 200 to 700°C, most preferably 350 to 600°C. During the heat treatment, organic components contained in the pressure- sensitive adhesive layer and the like disappear and the silicon- containing binder and the like for forming the printing sheet cure while uniting with the ink information. As a result, a burned sheet baked and tightly adhered to an adherend is formed.

Therefore, the baking printed sheet can preferably be used in various purposes, such as printing or coloring of various articles including potteries, glassware, ceramics, metallic products and enameled product, or impartation of identification information or identification marks comprising bar codes to such articles. In particular, due to that the baking printed sheet shows excellent thermal characteristics as described before, the baking printed sheet is preferably used in, for example, anneal step of heat-resistant products (e.g., various aluminum products such as slab or rolled foil) . In such a case, the baking printed sheet can be fixed to a surface of heat-resistant products by adhering the baking printed sheet to the heat-resistant products and baking the same while burning the same by utilizing heat treatment by a temperature of 200°C or higher in its production step. The adherend may have nay shape such as a flat shape or a curved shape as of containers.

The present invention is described in more detail by reference to the following examples, but it should be understood that the invention is not construed as being limited thereto. Unless otherwise indicated, all parts are by weight.

### EXAMPLE 1

100 Parts of MQ resin (a product of Shin-Etsu Chemical Co.), 17 parts of a silicone rubber having a weight average molecular weight of about 300,000 (a product of Shin-Etsu Chemical Co.), 60 parts of potassium titanate and 60 parts of ethyl cellulose were homogeneously mixed with toluene. The resulting dispersion was applied to a polyester film having a thickness of 75 µm with a doctor blade. The resulting coating was dried to form an ink receiving layer having a thickness of 60 µm. Thus, a printing sheet was obtained.

On the other hand, a toluene solution containing 100 parts of polybutyl acrylate having a weight average molecular weight of about 1,000,000 was applied to a separator made of glassine paper having a thickness of 70 µm treated with a silicone release agent with a doctor blade. The resulting coating was dried to form a pressure-sensitive adhesive layer having a thickness of 20 µm. The pressure-sensitive adhesive layer was adhered to a surface of the ink receiving layer obtained above, and the polyester film was peeled, thereby obtaining a printing sheet provided with a pressure-sensitive adhesive layer.

A thermal transfer ink information comprising bar codes was imparted to the ink receiving layer of the printing sheet using an ink ribbon having held therein a resin ink containing a metal oxide black pigment, and a thermal transfer printer. Thus, a baking printed sheet was obtained.

### EXAMPLE 2

A printing sheet and a baking printed sheet were obtained in the same manner as in Example 1 except that aluminum borate was used in place of potassium titanate.

### COMPARATIVE EXAMPLE 1

A printing sheet and a baking printed sheet were obtained in the same manner as in Example 1 except that silica powder (aerosil) was used in place of MQ resin.

### COMPARATIVE EXAMPLE 2

A printing sheet and a baking printed sheet were obtained in the same manner as in Example 1 except that silicone rubber was used in place of MQ resin.

### COMPARATIVE EXAMPLE 3

A baking printed sheet was obtained in the same manner as in Example 1 except that an ink ribbon using carbon was used in place of the ribbon using metal oxide black pigment.

### EVALUATION TESTS

The separator was peeled from each of the baking printed sheets obtained in the Examples and Comparative Examples. Each baking printed sheet was provisionally adhered to a slab through the pressure-sensitive adhesive layer, and then subjected to annealing treatment at 530°C for 12 hours . As a result, a burned sheet having ink information comprising black bar codes on a white background was obtained.

On each burned sheet, sinter strength was evaluated with a picking test using a cellophane adhesive tape, and reflectance was evaluated with a label tester. Further, on each burned sheet after the picking test, readability of bar codes was evaluated. In the Examples, ethyl cellulose contained in each printing sheet and organic components contained the pressure-sensitive adhesive layer and the like were burned out by the heat treatment. Each burned sheet remaining after the heat treatment was a cured sheet remained as a result of converting MQ resin and/or silicone rubber to silica.

The results obtained are shown in the Table below.

**Table**

| | Example 1 | Example 2 | Comparative Example 1 | Comparative Example 2 | Comparative Example 3 |
|---|---|---|---|---|---|
| Sinter strength | No change | No change | Broken | Broken | No change |
| Reflectance (%) | 80 | 50 | 80 | 80 | 80 |
| Readability | Good | Good | - | - | Prints disappeared |

## Claims

1. A baking sheet comprising a printing sheet which comprises an ink receiving layer in a sheet form, said ink receiving layer comprising a mixture of an inorganic powder and a silicon-containing binder and being located on a surface of the printing sheet, wherein said silicon-containing binder comprises trimethylsiloxysilicic acid or a polymer comprising monofunctional M units represented by the formula R₃SiO- wherein R represents a compound group, and quadrifunctional Q units represented by the formula Si(O-)₄.

2. The baking sheet as claimed in claim 1, wherein said inorganic powder is a metal powder or a ceramic powder.

3. The baking sheet as claimed in claim 1, wherein said inorganic powder has a particle size of 50 µm or smaller.

4. The baking sheet as claimed in claim 1, wherein an amount of said inorganic powder is 1 to 1,000 parts by weight per 100 parts by weight of the silicon-containing binder.

5. The baking sheet as claimed in claim 1, wherein said printing sheet consists of the ink receiving layer.

6. The baking sheet as claimed in claim 1, wherein said printing sheet comprises a reinforcing substrate and the ink-receiving layer.

7. A baking printed sheet comprising:
a printing sheet comprising an ink receiving layer in a sheet form, said ink receiving layer comprising a mixture of an inorganic powder and a silicon-containing binder and being located on a surface of the printing sheet, and
a thermal transfer ink information imparted to one surface of the printing sheet,
wherein said silicon-containing binder comprises trimethylsiloxysilicic acid or a polymer comprising monofunctional M units represented by the formula R₃SiO- wherein R represents a compound group, and quadrifunctional Q units represented by the formula Si(O-)₄, and said thermal transfer ink information comprises an ink comprising a metal oxide coloring material and an organic binder.

8. The baking printed sheet as claimed in claim 7, wherein said inorganic powder is a metal powder or a ceramic powder.

9. The baking printed sheet as claimed in claim 7, wherein said inorganic powder has a particle size of 50 µm or smaller.

10. The baking printed sheet as claimed in claim 7, wherein an amount of said inorganic powder is 1 to 1,000 parts by weight per 100 parts by weight of the silicon-containing binder.

11. The baking printed sheet as claimed in claim 7, wherein said printing sheet consists of the ink receiving layer.

12. The baking printed sheet as claimed in claim 7, wherein said printing sheet comprises a reinforcing substrate and the ink-receiving layer.

13. The baking printed sheet as claimed in claim 7, which further comprises a pressure-sensitive adhesive layer on the printing sheet at the side opposite the ink information.

14. The baking printed sheet as claimed in claim 13, wherein said pressure-sensitive adhesive layer has a thickness of 1 to 500 µm.

15. A burned sheet obtained by provisionally adhering a baking printed sheet, comprising:
a printing sheet comprising an ink receiving layer in a sheet form, said ink receiving layer comprising a mixture of an inorganic powder and a silicon-containing binder and being located on a surface of the printing sheet, and
a thermal transfer ink information imparted to the ink receiving layer of the printing sheet,
wherein said silicon-containing binder comprises trimethylsiloxysilicic acid or a polymer comprising monofunctional M units represented by the formula R₃SiO- wherein R represents a compound group, and quadrifunctional Q units represented by the formula Si(O-)₄, and said thermal transfer ink information comprises an ink comprising a metal oxide coloring material and an organic binder,
to an aluminum product, and burning the same at a temperature of 200°C or higher, thereby baking the printed sheet to the aluminum product.

16. The burned sheet as claimed in claim 15, wherein burning temperature is 200 to 1,200°C.
